# EUROPEAN PATENT SPECIFICATION

(11) **EP 4 132 726 B1**
(45) Date of publication and mention of the grant of the patent: **08.05.2024**
(21) Application number: 21722283.5
(22) Date of filing: 30.03.2021
(51) Int. Cl.: B05B 13/00, B05B 14/00

(54) **SPRAYING BOOTH**
SPRÜHKABINE
CABINE DE PULVÉRISATION

(30) Priority: 06.04.2020 IT 202000007318
(43) Date of publication of application: 15.02.2023
(73) Proprietor: Siver S.r.l., 06073 Corciano (PG) Frazione Taverne (IT)
(72) Inventor: TOMASSONI, Luca, 06073 Corciano (PG) Frazione Taverne (IT)
(74) Representative: Brunacci, Marco
(86) International application number: PCT/IB2021/052610
(87) International publication number: WO 2021/205284

(56) References cited:
- EP-A1- 3 341 133
- EP-B1- 3 341 133
- US-A1- 2007 062 444

## Description

### Technical Field

The present invention relates to a spraying booth, particularly for powder coating.

### Background Art

These booths are designed for the coating of different types of products and manufactured articles, such as, e.g., car components, fixtures, furnishing elements, etc. see for example US2007/062444.

Coating is a process of surface covering carried out both for decorative purposes, by coloring the elements to be coated, and for purposes of protection against corrosion, external agents, etc.

The coating is created by spraying powders of organic matrix and synthetic resins which, by adhering to the surfaces, color the element being coated.

Subsequently, the element is placed in special kilns where, through a heat treatment, the powders and resins melt and polymerize, thus forming the final coating layer.

Typically, known type of booths define the space in which the coating takes place and are provided with walls that define the volume thereof.

In particular, in addition to the roof and the floor, there are two front walls, which can be opened to allow access to the operators in charge, and two side walls provided with slits adapted to house the coating devices, such as spray guns, nozzles, and the like.

These devices are usually electronically controlled and have the function of sprinkling powder on the elements inserted in the booth.

The powder that does not adhere to the elements falls on the booth's floor and is sucked up by a suction system which is adapted to recover the fallen powder for later reuse.

Very often, for managerial and logistical reasons, the same booth is intended to accommodate successive coatings with powders that are different from those previously used, for example, in order to obtain products of a different color.

In this case, the different phases of work involve changes of color that, in addition to the replacement of the powders to be used, involve the complete cleaning of the interior of the booth.

In known type of booths, this operation requires the complete shutdown of the machinery to allow one or more operators to enter the booth and proceed with cleaning.

A drawback of known type of booths is, therefore, precisely related to the cleaning operations, which are necessary before each color change.

In fact, especially in the case of coatings with frequent color changes, the continuous and difficult cleaning and maintenance operations entail an increase in the time required to produce the manufactured articles and an increase in costs.

In order to overcome these drawbacks, upgraded spraying booths are known, inside which automated cleaning means are installed, provided with an anthropomorphic boom provided with appropriate cleaning devices adapted to carry out the cleaning operations.

Spraying booths are also known provided with a mobile, vertically sliding roof, which are provided with suitable cleaning means supported by the roof itself, facing the inside of the booth and adapted to carry out the cleaning operations during the descent and/or rise of the roof.

Even these new types of spraying booths are, however, susceptible to improvement. In particular, the cleaning means used are complex, particularly bulky inside the booth, expensive and impractical.

### Description of the Invention

The main aim of the present invention is to devise a spraying booth, the interior of which can be systematically cleaned in a rational and automated manner, but with a reduction in its technical and structural complexity compared to booths of known type.

The above mentioned objects are achieved by the present spraying booth having the characteristics of claim 1.

### Brief Description of the Drawings

Other characteristics and advantages of the present invention will become more evident from the description of a preferred, but not exclusive, embodiment of a spraying booth illustrated by way of an indicative, yet non-limiting example, in the accompanying tables of drawings wherein:
Figure 1 is an axonometric view of the booth according to the invention in the operating configuration;
Figure 2 is an axonometric view of the booth according to the invention in the operating configuration;
Figure 3 is a side cross-sectional view of the booth shown in Figure 2;
Figure 4 is a side cross-sectional view of the booth shown in Figure 1;
Figures 5 and 6 are exploded axonometric views of some elements of the booth according to the invention;
Figure 7 is a top view of some booth components according to the invention;
Figures 8, 9 and 10 are cross-sectional views showing some movement steps of some booth components shown in Figure 7.

### Embodiments of the Invention

With particular reference to these figures, reference numeral 1 globally indicates a spraying booth.

The booth 1 comprises:
- at least one spraying compartment 4 adapted to house the work phases for the spraying of products to be coated and open at the top to define an access opening 5 to the booth itself;
- at least one supporting frame 6, 7;
- cleaning means 29 mounted on the supporting frame 6, 7 and adapted to clean the inside of the compartment 4;
- movement means 40, placed between the supporting frame 6, 7 and the cleaning means 29, adapted to move the latter between a home configuration, wherein the cleaning means 29 are arranged outside the compartment 4, and at least one operating configuration, wherein the cleaning means 29 are arranged inside the compartment 4 through the access opening 5.

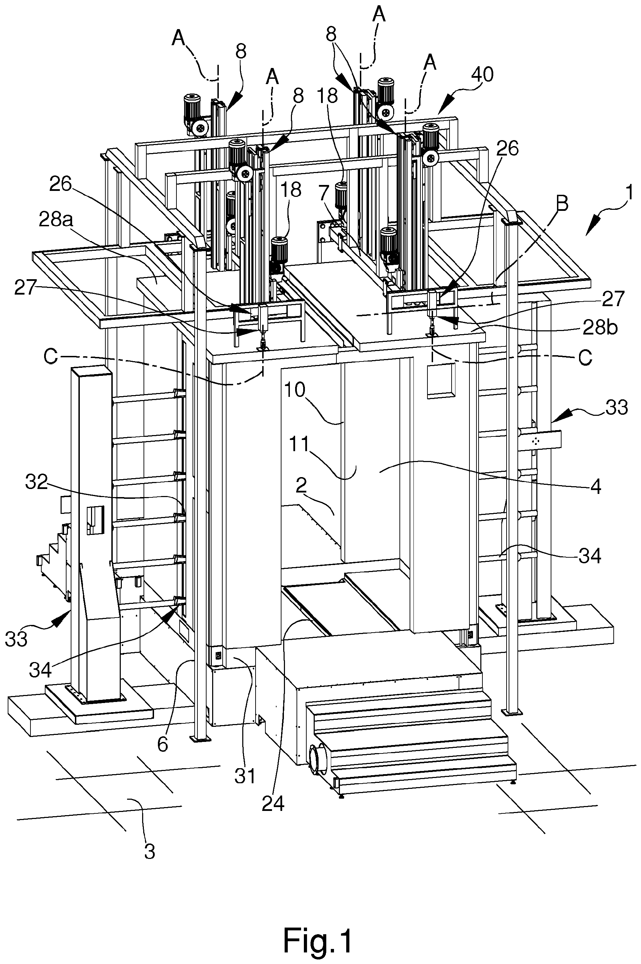

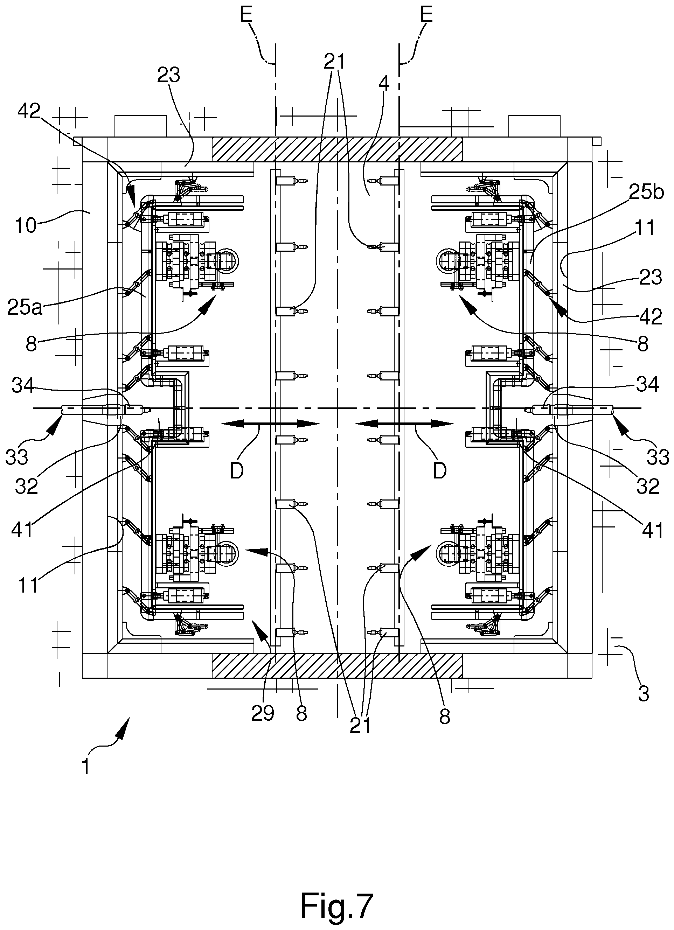

For ease of understanding of the figures, the cleaning means 29 are not shown in Figures 1-6, but are shown in detail in Figures 7-10.

Advantageously, the supporting frame 6, 7 is arranged to rest on a stable resting surface 3, i.e., a substantially horizontal flat surface, such as e.g. the ground, as shown in Figure 1.

Preferably, the supporting frame 6, 7 comprises at least one resting element 6 on the stable resting surface 3 of the type of an elongated body extending, in use, vertically.

Conveniently, the supporting frame 6, 7 comprises a plurality of resting elements 6 and each defining a corresponding fixed resting point on the stable resting surface 3.

This way, the resting elements 6 are outside the compartment 4 of the spraying booth 1.

The supporting frame 6, 7 comprises at least one cross member 7, which extends at least partly above the spraying compartment 4 and facing at least partly the access opening 5.

Advantageously, the cleaning means 29 are mounted on the cross member 7 above the spraying compartment 4 and facing the access opening 5.

The movement means 40 make the cleaning means 29 vertically movable between the home configuration and the operating configuration.

Conveniently, the spraying compartment 4 comprises a bedplate 31 opposite the access opening 5.

In addition, the spraying compartment 4 comprises a side wall 10, which extends from the bedplate 31 to end up at the point where the access opening 5 is located. This way, the side wall 10 and the bedplate 31 define a spraying compartment 4 of substantially hollow shape.

In particular, the spraying compartment 4 comprises one or more slits 32, cut through the side wall 10 and adapted to allow the insertion of suitable spraying means 33 into the compartment 4.

Advantageously, the spraying compartment 4 comprises at least one access port 2 formed on the side wall 10 adapted, e.g., to allow the insertion/removal into/out of the spraying compartment 4 of at least one product to be coated.

Preferably, the booth 1 comprises closing/opening means, not shown in the figures, of the access port 2.

In particular, the closing/opening means comprise at least one clamping body coupled in a movable manner to the spraying compartment 4 close to the access port 2, by sealing it, in the operating configuration, and away from the access port 2, by releasing it, in the home configuration.

Conveniently, the movement means 40 comprise at least one holding boom 8 of the cleaning means 29, mounted movable along a direction of movement A on the supporting frame 6, 7, arranged at least partly inside the spraying compartment 4, if in the operating configuration, and completely outside the spraying compartment 4, if in the home configuration.

This way, the cleaning means 29 are moved inside the spraying compartment 4 through the access opening 5.

Advantageously, the movement means 40 comprise guidance means 15, 16, 17 of the holding boom 8 along the direction of movement A, inside and outside of the spraying booth 1.

Furthermore, the movement means 40 comprise actuator means 18, 19, 20, 35, 36, 37, which are adapted to move the holding boom 8 along the direction of movement A.

Preferably, the holding boom 8 extends vertically along the direction of movement A.

In addition, the holding boom 8 has a substantially elongated shape along the direction of movement A, so as to reduce the clearance of the same inside the spraying compartment 4.

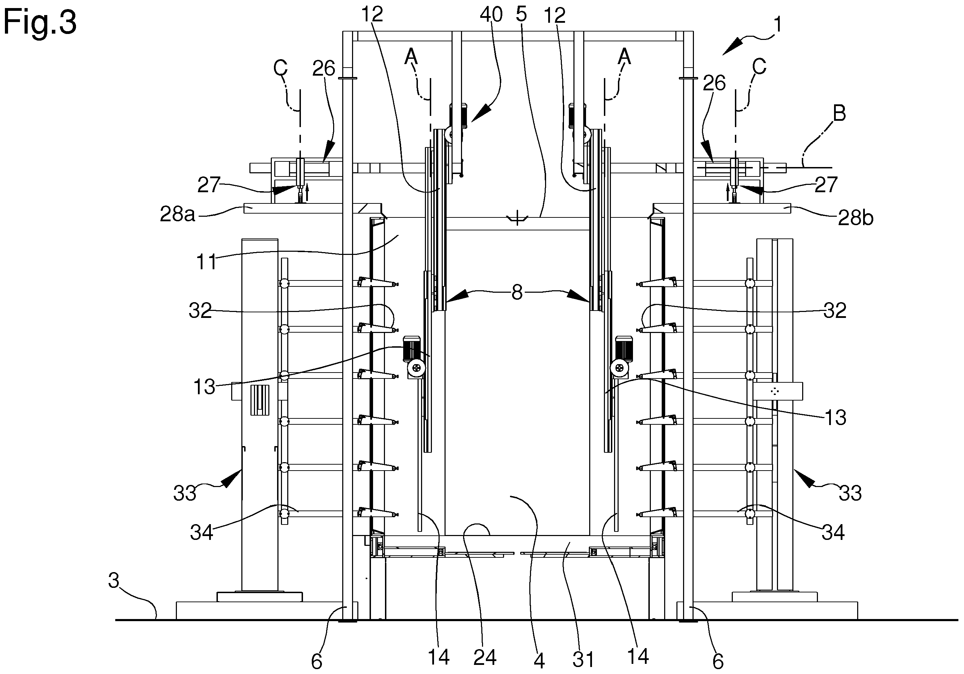

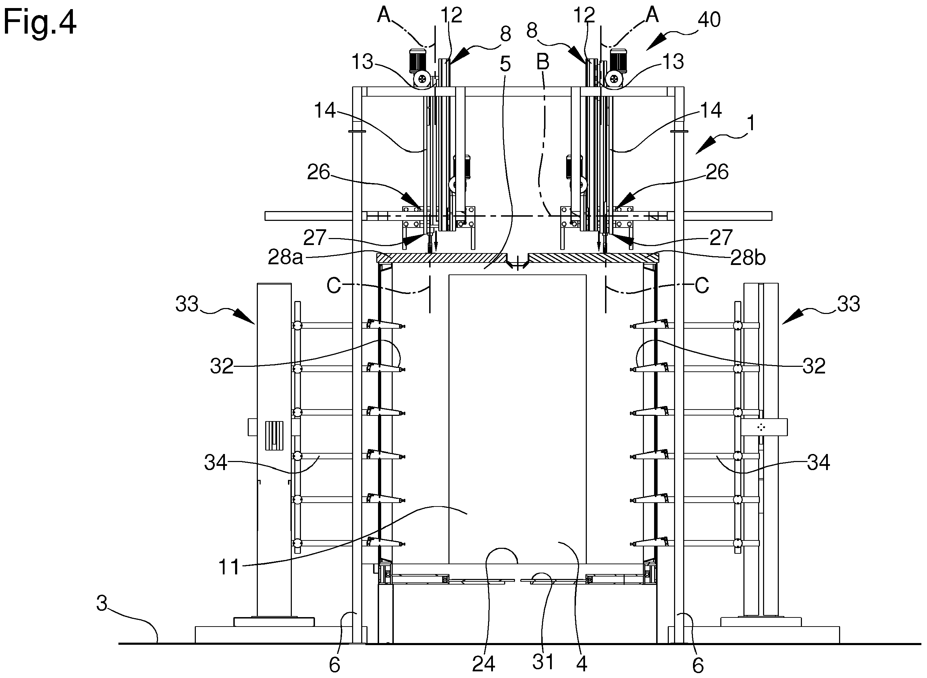

In particular, the holding boom 8 is mounted on the cross member 7, which extends substantially horizontally above the access opening 5, as shown in Figures 3 and 4. In particular, the holding boom 8 is a telescopic boom, extending inside the compartment 4 along the direction of movement A, in an operating configuration, and retracted outside the compartment 4 along the direction of movement A, in the home configuration.

This solution significantly reduces the vertical overhead clearance of the holding boom 8 above the spraying booth 1 in the home configuration.

In more detail, the holding boom 8 comprises:
- at least a first stretch 12, mounted movable in a sliding manner along the direction of movement A on the supporting frame 6, 7;
- at least a second stretch 13, coupled movable in a sliding manner along the direction of movement A to the first stretch 12.

In other words, the second stretch 13 is mounted on the first stretch 12 and is made integral by shifting with the latter and following the movement thereof along a predefined first stroke of the first stretch 12 with respect to the supporting frame 6, 7.

In addition, the second stretch 13 is movable with respect to the first stretch 12 along a second predefined stroke.

Thus, the total extension of the holding boom 8 is defined by the sum of the first stroke and of the second stroke.

Conveniently, the guidance means 15, 16, 17 comprise a first rectilinear guide 15, positioned between the supporting frame 6, 7 and the first stretch 12, and the actuator means 18, 19, 20, 35, 36, 37 comprise a first actuator assembly 18, 35, mounted on at least one of either the supporting frame 6, 7 or the first stretch 12 to move the latter along the first rectilinear guide 15.

Similarly, the guidance means 15, 16, 17 comprise a second rectilinear guide 16, positioned between the first stretch and the second stretch 12, 13, and the actuator means 18, 19, 20, 35, 36, 37 comprise a second actuator assembly 19, 36 mounted on at least one of either the first stretch or the second stretch 12, 13, to move the latter along the second rectilinear guide 16.

Advantageously, the first stretch and the second stretch 12, 13 are placed substantially juxtaposed and parallel to each other, in the home configuration, and substantially aligned longitudinally with each other along the direction of movement A, in the operating configuration.

The two stretches 12, 13 have substantially the same length, but alternative embodiments, wherein they have different lengths, cannot be ruled out. Advantageously, the holding boom 8 comprises at least one intermediate stretch 14, which is positioned between the first stretch and the second stretch 12, 13 and is coupled movable in a sliding manner along the direction of movement A.

In particular, the intermediate stretch 14 is arranged juxtaposed and substantially parallel to the two stretches 12, 13, in the home configuration, and substantially aligned longitudinally to the two stretches 12, 13 along the direction of movement A, in the operating configuration.

This way, the maximum extension of the holding boom 8 is further increased by the stroke of the intermediate stretch 14, similarly to what described above with respect to the first stretch and the second stretch 12, 13.

Furthermore, in the home configuration, the intermediate stretch 14 keeps the clearance of the holding boom 8 small, i.e., it does not increase its vertical overhead clearance above the booth 1.

Advantageously, the guidance means 15, 16, 17 comprise an intermediate rectilinear guide 17, positioned between the intermediate stretch 14 and one of either the first stretch 12 or the second stretch 13.

The second rectilinear guide 16 is positioned between the intermediate stretch 14 and the other of either the first stretch 12 or the second stretch 13.

Similarly, the actuator means 18, 19, 20, 35, 36, 37 comprise an intermediate actuator assembly 20, 37 mounted on at least one of either the intermediate stretch 14, the first stretch 12, or the second stretch 13.

Moreover, further embodiments cannot be ruled out wherein the holding boom 8 comprises a plurality of intermediate stretches 14 coupled movable and sliding along the direction of movement A to each other, by interposition of respective intermediate rectilinear guides 17, and movable along the same by means of respective intermediate actuator assemblies 20, 37.

Such embodiments would allow the maximum extension of the holding boom 8 to be further increased.

Preferably, the first stretch and the second stretch 12, 13 have a substantially equal length to the intermediate stretch 14.

Embodiments of the booth cannot however be ruled out wherein at least one of either the first, the second or the intermediate stretches 12, 13, 14 is longer than at least one of the other stretches 12, 13, 14.

Preferably, the stretches 12, 13, 14 have a substantially elongated shape, so as to minimize their clearance inside the spraying compartment 4.

According to the embodiment of the holding boom 8 shown in the figures, the first actuator assembly 18, 35 comprises a first actuator 18, mounted on the supporting frame 6, and a first rack 35, associated with the first stretch 12 along the direction of movement A and mechanically coupled to the first actuator 18.

The intermediate actuator assembly 20, 37 comprises an intermediate actuator 20, mounted on the second stretch 13, and an intermediate rack 37, associated with the intermediate stretch 14 along the direction of movement A and mechanically coupled to the intermediate actuator 20.

The second actuator assembly 19, 36 comprises a second actuator 19, coinciding with the intermediate actuator 20, and a second rack 36, associated with the first stretch 12 along the direction of movement A and mechanically coupleable to the intermediate actuator 20.

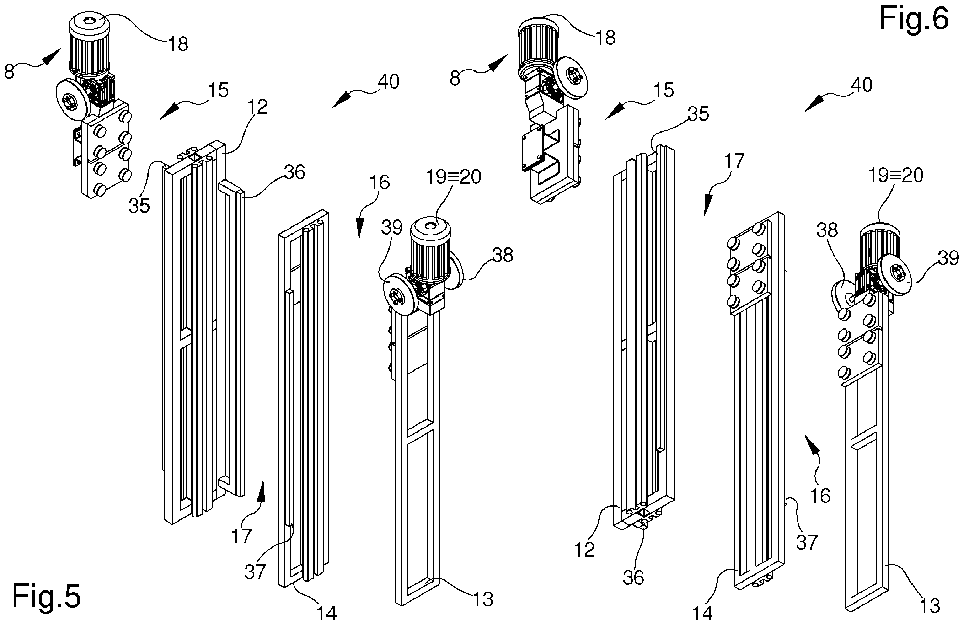

In particular, the intermediate actuator 20 comprises a first gear wheel 38, mechanically coupleable to the second rack 36, and a second gear wheel 39, mechanically coupleable to the intermediate rack 37, as shown in Figures 5 and 6. This way, in the switch from the operating configuration to the home configuration, the intermediate actuator 20 engages the intermediate rack 37 and moves the second stretch 13 facing the intermediate stretch 14, until it allows the second gear wheel 39 to engage the second rack 36 and move the second stretch 13 facing the first stretch 12.

In particular, the movement means 40 comprise securing means, not shown in the figures, of the second stretch 13 to the intermediate stretch 14.

The securing means are configured to secure the intermediate stretch 14 to the second stretch 13 during the movement of the holding boom 8 from the operating configuration to the home configuration, i.e., during the ascent of the second stretch 13, to also move the intermediate stretch 14 facing the first stretch 12.

Conveniently, the movement means 40 comprise a plurality of holding booms 8.

Furthermore, the movement means 40 comprise guidance means 15, 16, 17 and actuator means 18, 19, 20, 35, 36, 37 in the same number as the holding booms 8. Preferably, the holding booms 8 are arranged at the same height and at predefined positions corresponding to the vertices of a square.

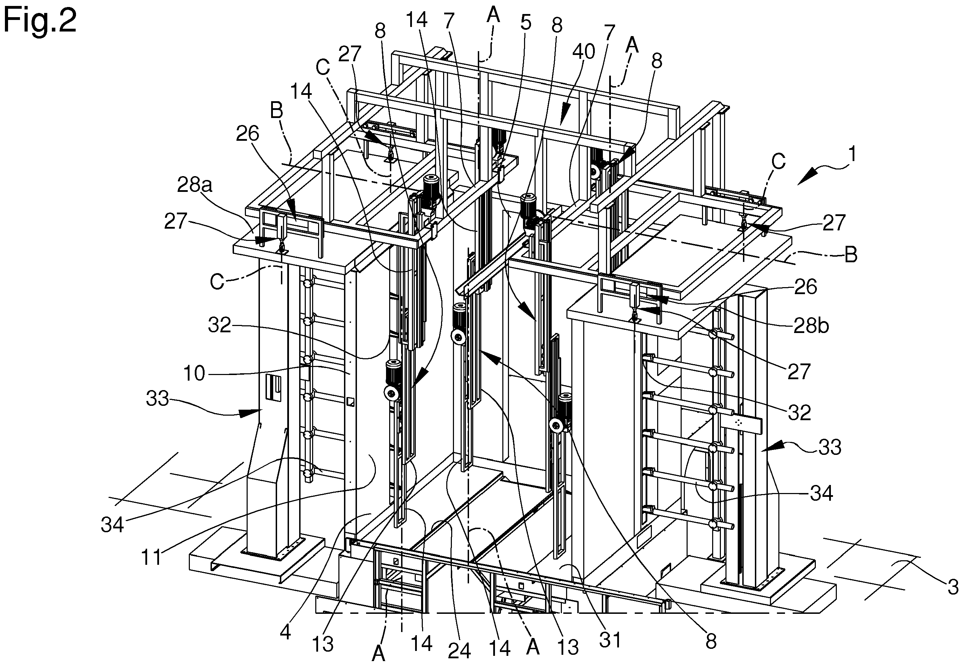

Advantageously, the supporting frame 6, 7 comprises a pair of cross members 7 extending vertically parallel to each other above the access opening 5, on each cross member 7 being mounted a pair of holding booms 8, as shown in Figure 2.

Conveniently, the cleaning means 29 comprise at least one cleaning device 21, 23 of the spraying compartment 4, selected from the list comprising a pneumatic dispensing device 21, a hydraulic dispensing device and an absorbing element 23.

Preferably, the pneumatic dispensing device 21 is of the type of a dispenser provided with at least one nozzle through which a pressurized air stream is delivered.

The hydraulic dispensing device, on the other hand, is preferably of the type of a dispenser provided with at least one nozzle through which at least one liquid cleaning solution is delivered.

In the remainder of the following disclosure, the characteristics relating to the pneumatic dispensing device 21 are to be considered valid also for the hydraulic dispensing device, since the only difference between these devices lies in the nature of the fluid delivered.

In addition, the absorbing element 23 is of the type of a sponge, a cloth, or the like. Preferably, the absorbing element 23 is a sponge.

Preferably, the pneumatic dispensing device 21 is angled downwards, so as to direct the air stream abutting against the vertical walls of the compartment 4 towards the bedplate 31 and not towards the access opening 5.

Advantageously, the spraying booth 1 comprises suction means 24, that are arranged at the point where the bedplate 31 of the booth itself is located and that are adapted to extract the fluids present inside the spraying compartment 4.

This way, in the operating configuration of the cleaning means 29, any fluid inside the spraying compartment 4 is extracted by the suction means 24, thus preventing it from exiting through the access opening 5.

Preferably, the suction means 24 coincide with the suction means used for the suction of the paint during the coating steps.

Preferably, the cleaning means 29 comprise a plurality of hydraulic dispensing devices, a plurality of pneumatic dispensing devices, and a plurality of absorbing elements 23, each arranged to operate on a predefined portion of the spraying compartment 4, to intervene substantially on the entire perimeter of the compartment itself.

In the exemplary case of the interior surface 11, when switching from the home configuration to the operating configuration, the cleaning devices 21, 23 vertically explore the perimeter of the spraying compartment 4, by cleaning the entire surface extension of the interior surface 11.

More in detail, the pneumatic dispensing device 21 is arranged at a lower height than the absorbing element 23.

Thus, when switching from the home configuration to the operating configuration, the absorbing element 23 slides in contact with the interior surfaces of the spraying compartment 4 to follow the pneumatic dispensing device 21.

Advantageously, the movement means 40 comprise at least one holding frame 25a, 25b, associated with the holding boom 8.

At least one cleaning device 21, 23 is mounted on the holding frame 25a, 25b and, in an operating configuration, is placed facing and/or in contact with the spraying compartment 4, thus cleaning it.

Advantageously, the holding frame 25a, 25b is associated with the second stretch 13.

Preferably, the holding frame 25a, 25b is associated with a plurality of second stretches 13.

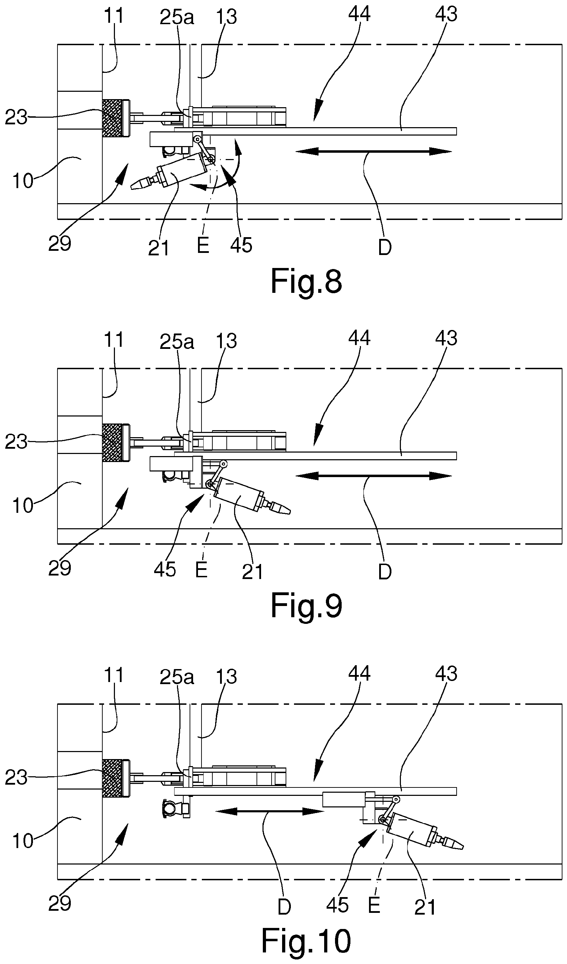

With particular reference to Figure 8, the holding frame 25a, 25b comprises a first supporting element 25a, associated with a pair of second stretches 13, and a second supporting element 25b, associated with another pair of second stretches 13, to substantially define a holding frame 25a, 25b, facing the spraying compartment 4 along its entire perimeter.

Further embodiments cannot, however, be ruled out, wherein the holding frame 25a, 25b is associated with each second stretch 13 of each holding boom 8 and comprises four connecting elements, which are positioned between corresponding pairs of holding booms 8 respectively, to make a substantially continuous holding frame 25a, 25b of substantially square shape.

Conveniently, the cleaning devices 21, 23 are mounted on the supporting elements 25a, 25b, so as to operate on the entire perimeter of the interior surface 11.

Advantageously, the holding frame 25a, 25b defines at least one vacuous portion 41, which allows the passage of external elements, arranged inside the spraying compartment 4, such as e.g. paint dispensers or the like.

In particular, the holding frame 25a, 25b defines at least one vacuous portion 41, at the point where the first supporting element 25a is located, and at least one vacuous portion 41, at the point where the second supporting element 25b is located, as shown in Figure 8.

Further embodiments cannot however be ruled out, wherein the holding frame 25a, 25b defines a plurality of vacuous portions 41, such as e.g. a pair of vacuous portions 41 at the point where each supporting element 25a, 25b is located.

Advantageously, the booth 1 comprises operating means 42 of the cleaning means 29 configured to activate/deactivate at least one of the cleaning devices 21, 23.

In particular, the operating means 42 comprise at least one operating assembly, not shown in the figures, positioned between the holding frame 25a, 25b and the absorbing element 23 and configured to move the absorbing element 23 close to the side wall 10, in order to abut against the interior surface 11, and away from the side wall 10.

This way, in the operating configuration, the operating assembly moves the absorbing element 23 to abut against the interior surface 11.

This solution allows the absorbing element 23 to slide in contact with the interior surface 11, thus absorbing any liquids and/or paint residue present thereon.

Advantageously, the booth 1 comprises displacement means 44, 45 of at least one of the cleaning device 21, 23 between at least a first configuration of use, wherein the cleaning device 21, 23 faces the side wall 10, and at least a second configuration of use, wherein the cleaning device faces the bedplate 31.

The displacement means 44, 45 comprise at least one rotation assembly 45 of the cleaning device 21, 23 around an axis of rotation E to move the latter between the first and the second configuration of use.

The displacement means 44, 45 also comprise at least one longitudinal movement assembly 44 of the cleaning device 21, 23 along a direction of displacement D arranged parallel with respect to the bedplate 31.

Preferably, the axis of rotation E is transverse with respect to the direction of displacement D.

In particular, the axis of rotation E is orthogonal with respect to the direction of displacement D.

Conveniently, the rotation assembly 45 is positioned between at least one cleaning device 21, 23 and the longitudinal movement means 44, and the longitudinal movement assembly 44 is positioned between the longitudinal movement means 44 and the rotation assembly 45.

Preferably, the longitudinal movement assembly 44 is positioned between at least one holding boom 8 and the rotation assembly 45.

Further embodiments of the displacement means 44, 45 cannot be ruled out, wherein the longitudinal movement assembly 44 is positioned between the holding frame 25a, 25b and the rotation assembly 45.

This way, in the second configuration of use, the longitudinal movement assembly 44 moves the cleaning device 21, 23 along the direction of displacement D, thus cleaning the bedplate 31.

Advantageously, the longitudinal movement assembly 44 comprises at least one guidance assembly 43 which extends longitudinally along the direction of displacement D and the rotation assembly 45 is coupled in a sliding manner along the guidance assembly 43.

This way, in the second configuration of use, the rotation assembly 45 is moved integral together with the cleaning device 21, 23 along the direction of displacement D.

This solution allows the cleaning device 21, 23 to explore the longitudinal extension of the bedplate 31.

Preferably, the cleaning device 21, 23 is a pneumatic dispensing device 21. Advantageously, the displacement means 44, 45 are configured to move a plurality of pneumatic dispensing devices 21 arranged aligned with each other along a direction of arrangement substantially parallel to the axis of rotation E.

This way, in the second configuration of use, the cleaning devices 21, 23 explore the transverse extension of the bedplate 31.

Furthermore, further embodiments of the pneumatic dispensing device 21 cannot be ruled out, wherein the same comprises a plurality of dispensers arranged aligned with each other along a direction of positioning substantially parallel to the axis of rotation E.

This way, the displacement means 44, 45 move along the direction of displacement D an individual cleaning device 21, 23 adapted to substantially explore the entire extension of the bedplate 31.

In particular, the booth 1 comprises a pair of displacement means 44, 45 arranged substantially opposite each other.

This way, in the second configuration of use, the longitudinal movement assemblies 44 move the respective cleaning devices 21, 23 along the direction of displacement D as they approach/move away from each other, as shown in Figures 7-10.

This solution allows the cleaning device(s) 21, 23 of each displacement means 44, 45 to explore half the extension of the bedplate 31.

Advantageously, each displacement means 44, 45 is associated with a corresponding holding boom 8.

Conveniently, the booth 1 comprises fastening means 26, 27, 28a, 28b provided with:
- at least one closure body 28a, 28b of the access opening 5, adapted to close the spraying compartment 4;
- shifting means 26, 27 of the closure body 28a, 28b approaching the access opening 5, closing it in the home configuration, and moving away from the access opening 5, releasing it in the operating configuration, in such a way as to insert the cleaning means 29 inside the spraying compartment 4.

Preferably, in the home configuration of the cleaning means 29, the closure body 28a, 28b is arranged to abut against the spraying compartment 4 at the point where the access opening 5 is located, by hermetically closing and sealing it.

In particular, the closure body 28a, 28b is mounted on the supporting frame 6, 7, by interposition of the shifting means 26, 27, and is arranged in the proximity of the access opening 5.

Advantageously, the shifting means 26, 27 comprise at least one of:
- at least one horizontal shifting unit 26 of the closure body 28a, 28b along a direction of horizontal shift B;
- at least one vertical shifting unit 27 of the closure body 28a, 28b along a direction of vertical shift C, substantially transverse to the direction of horizontal shift B.

Conveniently, the closure body 28a, 28b is mechanically coupled to the shifting means 26, 27.

In addition, the closure body 28a, 28b is arranged substantially at the same height as the access opening 5.

In particular, the closure body 28a, 28b is mechanically coupled to the horizontal shifting unit 26 and horizontally movable along the direction of horizontal shift B, to switch from the home configuration to the operating configuration and vice versa.

This way, the horizontal shift of the closure body 28a, 28b along the direction B allows the easy closure/release of the access opening 5.

More in detail, the closure body 28a, 28b comprises at least two horizontally movable leaves 28a, 28b that are horizontally movable close to/away from each other to close/release the access opening 5 in the home configuration and in the operating configuration, respectively.

Preferably, the shifting means 26, 27 comprise both the horizontal shifting unit 26 and the vertical shifting unit 27.

This way, the leaves 28a, 28b are vertically moved along the direction of shift C close to/away from the spraying compartment 4 in the operating configuration and in the home configuration, respectively.

The operation of the booth 1 is as follows.

Before starting a new coating cycle using paints of a different color with respect to the previous coating cycle, it is necessary to carry out a cleaning cycle of the booth. Therefore, the movement means 40 move the closure body 28a, 28b away from the spraying compartment 4.

In detail, the vertical shifting unit 27 vertically moves the closure body 28a, 28b away from the compartment 4, vertically spacing the closure body 28a, 28b away from the access opening 5.

Next, the horizontal shifting unit 26 horizontally moves the closure body 28a, 28b, releasing the access opening 5.

In particular, the horizontal shifting unit 26 moves the leaves 28a, 28b away from each other and arranges them laterally to the access opening 5, by releasing it.

In such a configuration, the movement means 40 move the cleaning means 29 inside the spraying compartment 4.

In particular, the actuator means 18, 19, 20, 35, 36, 37 move the stretches 12, 13, 14 along the direction of movement A, by means of the respective guidance means 15, 16, 17, extending the holding booms 8 inside the spraying compartment 4 and reaching the operating configuration.

When the cleaning of the spraying compartment 4 is completed, the movement means 40 take the holding booms 8 out of the compartment itself.

In particular, each holding boom 8 is retracted on itself to juxtapose, facing each other, the stretches 12, 13, 14, as shown in Figure 4.

After this configuration has been reached, the shifting means 26, 27 bring the closure body 28a, 28b close to the spraying compartment 4.

Preferably, the booth 1 comprises spraying means 33 provided with one or more spraying devices 34 insertable in the corresponding slits 32.

It has in practice been ascertained that the described invention achieves the intended objects.

In particular, the fact should be noted that the vertically elongated shape of the holding boom considerably reduces the clearance inside the spraying booth in the operating configuration.

In addition, the telescopic structure defined by the coupling of the first stretch, the second stretch and the intermediate stretch significantly reduces the clearance of the holding boom in the home configuration.

These measures make the use of the cleaning means fully automated, simple and fast.

It should also be pointed out that the technical characteristics of the movement means and of the cleaning means described above help to considerably reduce and simplify the technical and structural complexity of the spraying booth as a whole.

## Claims

1. Spraying booth (1), comprising:
- at least one spraying compartment (4), adapted to house the work phases for the spraying of products to be painted and open at the top, to define an access opening (5) to the booth itself;
- at least one supporting frame (6, 7);
- cleaning means (29) mounted on said supporting frame (6, 7) and adapted to clean the inside of said compartment (4);
- movement means (40), placed between said supporting frame (6, 7) and said cleaning means (29), adapted to move the latter between a home configuration, wherein said cleaning means (29) are arranged outside said compartment (4), and at least one operating configuration, wherein said cleaning means (29) are arranged inside said compartment (4) through the access opening (5);
wherein said movement means (40) comprise at least one holding boom (8) of said cleaning means (29), mounted movable along a direction of movement (A) on said supporting frame (6, 7), arranged at least partly inside said spraying compartment (4), in said operating configuration, and outside said spraying compartment (4), in the home configuration;
**characterized by** the fact that said holding boom (8) is a telescopic boom, extending inside said spraying compartment (4) along said direction of movement (A), in said operating configuration, and retracted outside said spraying compartment (4) along said direction of movement (A), in said home configuration.

2. Booth (1) according to claim 1, **characterized by** the fact that said holding boom (8) comprises:
- at least a first stretch (12), mounted movable in a sliding manner along said direction of movement (A) on said supporting frame (6, 7);
- at least a second stretch (13), coupled movable in a sliding manner along said direction of movement (A) to said first stretch (12);
said first and said second stretches (12, 13) being substantially placed juxtaposed and parallel to each other, in said home configuration, and being moved away and arranged substantially aligned to each other along said direction of movement (A), in said operating configuration.

3. Booth (1) according to one or more of the preceding claims, **characterized by** the fact that said holding boom (8) comprises at least one intermediate stretch (14), placed between said first and said second stretch (12, 13) and coupled movable in a sliding manner to the latter along said direction of movement (A), said intermediate stretch (14) being placed substantially juxtaposed and parallel to said first and said second stretches (12, 13), in said home configuration, and substantially aligned with said first and said second stretch (12, 13) along said direction of movement (A), in said operating configuration.

4. Booth (1) according to one or more of the preceding claims, **characterized by** the fact that said movement means (40) comprise a plurality of said holding booms (8).

5. Booth (1) according to one or more of the preceding claims, **characterized by** the fact that said cleaning means (29) comprise at least one cleaning device (21, 23) of said spraying compartment (4), selected from the list comprising a pneumatic dispensing device (21), a hydraulic dispensing device, an absorbing element (23).

6. Booth (1) according to one or more of the preceding claims, **characterized by** the fact that said cleaning means (29) comprise a plurality of said cleaning devices (21,23).

7. Booth (1) according to one or more of the preceding claims, **characterized by** the fact that:
- said movement means (40) comprise at least one holding frame (25a, 25b), associated with at least one holding boom (8);
- said at least one cleaning device (21, 23) is mounted on said holding frame (25a, 25b) and in said operating configuration is placed facing and/or in contact with said spraying compartment (4), cleaning it.

8. Booth (1) according to one or more of the preceding claims, **characterized by** the fact that:
- said spraying compartment (4) comprises at least one bedplate (31) opposite said access opening (5) and at least one side wall (10) extending from the bedplate (31) to end up at the point where said access opening (5) is located;
- it comprises displacement means (44, 45) of at least one of said cleaning devices (21, 23) between at least a first configuration of use, wherein said at least one cleaning device (21, 23) faces said side wall (10), and at least a second configuration of use, wherein said at least one cleaning device (21, 23) faces said bedplate (31).

9. Booth (1) according to one or more of the preceding claims, **characterized by** the fact that it comprises fastening means (26, 27, 28a, 28b) of said spraying compartment (4), provided with:
- at least one closure body (28a, 28b) of said access opening (5), adapted to close said spraying compartment (4);
- shifting means (26, 27) of the closure body (28a, 28b) approaching said access opening (5), closing it in said home configuration, and moving away from said access opening (5), releasing it, in said operating configuration, in such a way as to insert said cleaning means (29) inside said spraying compartment (4).

10. Booth (1) according to one or more of the preceding claims, **characterized by** the fact that said shifting means (26, 27) comprise at least one of:
- at least one horizontal shifting unit (26) of said closure body (28a, 28b) along a direction of horizontal shift (B);
- at least one vertical shifting unit (27) of said closure body (28a, 28b) along a direction of vertical shift (C), substantially transverse to said direction of horizontal shift (B).

## Patentansprüche

1. Spritzkabine (1), umfassend:
- mindestens ein Sprühabteil (4), das zur Aufnahme der Arbeitsphasen für das Spritzen der zu lackierenden Produkte geeignet und nach oben offen ist, um eine Zugangsöffnung (5) zur Kabine selbst zu definieren;
- mindestens einen Tragrahmen (6, 7);
- Reinigungsmittel (29), die auf dem Tragrahmen (6, 7) montiert sind und das Innere des Abteils (4) reinigen können;
- Bewegungsmittel (40), die zwischen dem Tragrahmen (6, 7) und den Reinigungsmitteln (29) angeordnet ist und ausgebildet sind, letztere zwischen einer Ausgangskonfiguration, in der die Reinigungsmittel (29) außerhalb des Abteils (4) angeordnet sind, und mindestens einer Betriebskonfiguration, in der die Reinigungsmittel (29) durch die Zugangsöffnung (5) innerhalb des Abteils (4) angeordnet sind, zu bewegen
wobei die Bewegungsmittel (40) mindestens einen Halteausleger (8) für die Reinigungsmittel (29) umfassen, der entlang einer Bewegungsrichtung (A) beweglich an dem Tragrahmen (6, 7) angebracht ist und in der Betriebskonfiguration zumindest teilweise innerhalb des Sprühabteils (4) und in der Ausgangskonfiguration außerhalb des Sprühabteils (4) angeordnet ist;
**dadurch gekennzeichnet, dass** der Halteausleger (8) ein Teleskopausleger ist, der sich in der Betriebskonfiguration innerhalb des Sprühabteils (4) entlang der Bewegungsrichtung (A) erstreckt und in der Ausgangskonfiguration außerhalb des Sprühabteils (4) entlang der Bewegungsrichtung (A) eingezogen ist.

2. Kabine (1) nach Anspruch 1, **dadurch gekennzeichnet, dass** der Halteausleger (8) umfasst:
- mindestens ein erstes Gestänge (12), das entlang der Bewegungsrichtung (A) verschiebbar an dem Tragrahmen (6, 7) angebracht ist;
- mindestens ein zweites Gestänge (13), das entlang der Bewegungsrichtung (A) verschiebbar mit dem ersten Gestänge (12) verbunden ist;
wobei das erste und das zweite Gestänge (12, 13) in der Ausgangskonfiguration im Wesentlichen nebeneinander und parallel zueinander angeordnet sind und in der Betriebskonfiguration entlang der Bewegungsrichtung (A) voneinander wegbewegt und im Wesentlichen zueinander ausgerichtet sind.

3. Kabine (1) nach einem oder mehreren der vorhergehenden Ansprüche, **dadurch gekennzeichnet, dass** der Halteausleger (8) mindestens ein Zwischengestänge (14) umfasst, das zwischen dem ersten und dem zweiten Gestänge (12, 13) angeordnet ist und mit dem letzteren entlang der Bewegungsrichtung (A) verschiebbar verbunden ist, wobei das Zwischengestänge (14) in der Ausgangskonfiguration im Wesentlichen neben und parallel zu dem ersten und der zweiten Gestänge (12, 13) angeordnet ist und in der Betriebskonfiguration im Wesentlichen zu dem ersten und der zweiten Gestänge (12, 13) entlang der Bewegungsrichtung (A) ausgerichtet ist.

4. Kabine (1) nach einem oder mehreren der vorhergehenden Ansprüche, **dadurch gekennzeichnet, dass** die Bewegungsmittel (40) eine Vielzahl der Halteausleger (8) umfassen.

5. Kabine (1) nach einem oder mehreren der vorhergehenden Ansprüche, **dadurch gekennzeichnet, dass** die Reinigungsmittel (29) mindestens eine Reinigungsvorrichtung (21, 23) des Sprühabteils (4) umfassen, die aus der Liste ausgewählt ist, die eine pneumatische Abgabevorrichtung (21), eine hydraulische Abgabevorrichtung ein absorbierendes Element (23) umfasst.

6. Kabine (1) nach einem oder mehreren der vorhergehenden Ansprüche, **dadurch gekennzeichnet, dass** die Reinigungsmittel (29) eine Vielzahl der Reinigungsvorrichtungen (21, 23) umfassen.

7. Kabine (1) nach einem oder mehreren der vorangehenden Ansprüche, **dadurch gekennzeichnet, dass**
- die Bewegungsmittel (40) mindestens einen Halterahmen (25a, 25b) umfassen, der mindestens einem Halteausleger (8) zugeordnet ist;
- die mindestens eine Reinigungsvorrichtung (21, 23) an dem Halterahmen (25a, 25b) angebracht ist und in der Betriebskonfiguration dem Sprühabteil (4) zugewandt und/oder in Kontakt mit diesem angeordnet ist, um dieses zu reinigen.

8. Kabine (1) nach einem oder mehreren der vorhergehenden Ansprüche, **dadurch gekennzeichnet, dass**
- das Sprühabteil (4) mindestens eine Grundplatte (31) gegenüber der Zugangsöffnung (5) und mindestens eine Seitenwand (10) aufweist, die sich von der Grundplatte (31) aus erstreckt und an der Stelle endet, an der sich die Zugangsöffnung (5) befindet;
- sie Mittel (44, 45) zum Bewegen mindestens einer der Reinigungsvorrichtungen (21, 23) zwischen mindestens einer ersten Betriebskonfiguration, in der die mindestens eine Reinigungsvorrichtung (21, 23) der Seitenwand (10) zugewandt ist, und mindestens einer zweiten Betriebskonfiguration umfasst, in der die mindestens eine Reinigungsvorrichtung (21, 23) der Grundplatte (31) zugewandt ist.

9. Kabine (1) nach einem oder mehreren der vorhergehenden Ansprüche, **dadurch gekennzeichnet, dass** sie Befestigungsmittel (26, 27, 28a, 28b) für das Sprühabteil (4) umfasst, das versehen ist mit:
- mindestens einem Verschlusskörper (28a, 28b) für die Zugangsöffnung (5), der ausgebildet ist, das Sprühabteil (4) zu schließen;
- Verschiebemitteln (26, 27) für den Verschlusskörper (28a, 28b), die sich in der Ausgangskonfiguration der Zugangsöffnung (5) nähern und sie schließen und sich in der Betriebskonfiguration von der Zugangsöffnung (5) wegbewegen und sie freigeben, so dass die Reinigungsmittel (29) in das Innere des Sprühabteils (4) eingeführt werden.

10. Kabine (1) nach einem oder mehreren der vorhergehenden Ansprüche, **dadurch gekennzeichnet, dass** die Verschiebemittel (26, 27) mindestens eines der folgenden Elemente umfassen
- mindestens eine Einheit (26) zum horizontalen Verschieben des Verschlusskörpers (28a, 28b) entlang einer horizontalen Verschieberichtung (B);
- mindestens eine Einheit (27) zum vertikalen Verschieben des Verschlusskörpers (28a, 28b) entlang einer vertikalen Verschieberichtung (C), die im Wesentlichen quer zur horizontalen Verschieberichtung (B) verläuft.

## Revendications

1. - Cabine de pulvérisation (1), comprenant :
- au moins un compartiment de pulvérisation (4), agencé pour abriter les phases de travail pour la pulvérisation de produits à peindre et ouvert en partie supérieure, pour définir une ouverture d'accès (5) à la cabine elle-même ;
- au moins un cadre de support (6, 7) ;
- des moyens de nettoyage (29) montés sur ledit cadre de support (6, 7) et agencés pour nettoyer l'intérieur dudit compartiment (4) ;
- des moyens de mouvement (40), placés entre ledit cadre de support (6, 7) et lesdits moyens de nettoyage (29), agencés pour déplacer ces derniers entre une configuration initiale, dans laquelle lesdits moyens de nettoyage (29) sont disposés à l'extérieur dudit compartiment (4), et au moins une configuration de fonctionnement, dans laquelle lesdits moyens de nettoyage (29) sont disposés à l'intérieur dudit compartiment (4) à travers l'ouverture d'accès (5) ;
lesdits moyens de mouvement (40) comprenant au moins une rampe de maintien (8) desdits moyens de nettoyage (29), montée de manière mobile selon une direction de mouvement (A) sur ledit cadre de support (6, 7), disposée au moins en partie à l'intérieur dudit compartiment de pulvérisation (4), dans ladite configuration de fonctionnement, et à l'extérieur dudit compartiment de pulvérisation (4), dans la configuration initiale ;
**caractérisée par le fait que** ladite rampe de maintien (8) est une rampe télescopique, s'étendant à l'intérieur dudit compartiment de pulvérisation (4) selon ladite direction de mouvement (A), dans ladite configuration de fonctionnement, et se rétractant à l'extérieur dudit compartiment de pulvérisation (4) selon ladite direction de mouvement (A), dans ladite configuration initiale.

2. - Cabine (1) selon la revendication 1, **caractérisée par le fait que** ladite rampe de maintien (8) comprend :
- au moins un premier tronçon (12), monté mobile d'une manière coulissante selon ladite direction de mouvement (A) sur ledit cadre de support (6, 7) ;
- au moins un second tronçon (13), couplé mobile d'une manière coulissante selon ladite direction de mouvement (A) audit premier tronçon (12) ;
lesdits premier et second tronçons (12, 13) étant sensiblement placés juxtaposés et parallèles l'un à l'autre, dans ladite configuration initiale, et étant écartés et disposés sensiblement en alignement l'un par rapport à l'autre selon ladite direction de mouvement (A), dans ladite configuration de fonctionnement.

3. - Cabine (1) selon une ou plusieurs des revendications précédentes, **caractérisée par le fait que** ladite rampe de maintien (8) comprend au moins un tronçon intermédiaire (14), placé entre lesdits premier et second tronçons (12, 13) et couplé mobile d'une manière coulissante à ces derniers selon ladite direction de mouvement (A), ledit tronçon intermédiaire (14) étant placé sensiblement juxtaposé et parallèle auxdits premier et second tronçons (12, 13), dans ladite configuration initiale, et sensiblement aligné avec lesdits premier et second tronçons (12, 13) selon ladite direction de mouvement (A), dans ladite configuration de fonctionnement.

4. - Cabine (1) selon une ou plusieurs des revendications précédentes, **caractérisée par le fait que** lesdits moyens de mouvement (40) comprennent une pluralité desdites rampes de maintien (8).

5. - Cabine (1) selon une ou plusieurs des revendications précédentes, **caractérisée par le fait que** lesdits moyens de nettoyage (29) comprennent au moins un dispositif de nettoyage (21, 23) dudit compartiment de pulvérisation (4), choisi dans la liste comprenant un dispositif de distribution pneumatique (21), un dispositif de distribution hydraulique, un élément absorbant (23).

6. - Cabine (1) selon une ou plusieurs des revendications précédentes, **caractérisée par le fait que** lesdits moyens de nettoyage (29) comprennent une pluralité desdits dispositifs de nettoyage (21, 23).

7. - Cabine (1) selon une ou plusieurs des revendications précédentes, **caractérisée par le fait que** :
- lesdits moyens de mouvement (40) comprennent au moins un cadre de maintien (25a, 25b), associé à au moins une rampe de maintien (8) ;
- ledit au moins un dispositif de nettoyage (21, 23) est monté sur ledit cadre de maintien (25a, 25b) et, dans ladite configuration de fonctionnement, est placé face audit compartiment de pulvérisation (4) et/ou en contact avec celui-ci, le nettoyant.

8. - Cabine (1) selon une ou plusieurs des revendications précédentes, **caractérisée par le fait que** :
- ledit compartiment de pulvérisation (4) comprend au moins une plaque de base (31) opposée à ladite ouverture d'accès (5) et au moins une paroi latérale (10) s'étendant à partir de la plaque de base (31) pour se terminer à l'emplacement où se situe ladite ouverture d'accès (5) ;
- elle comprend des moyens de déplacement (44, 45) d'au moins un desdits dispositifs de nettoyage (21, 23) entre au moins une première configuration d'utilisation, dans laquelle ledit au moins un dispositif de nettoyage (21, 23) fait face à ladite paroi latérale (10), et au moins une seconde configuration d'utilisation, dans laquelle ledit au moins un dispositif de nettoyage (21, 23) fait face à ladite plaque de base (31).

9. - Cabine (1) selon une ou plusieurs des revendications précédentes, **caractérisée par le fait qu'**elle comprend des moyens de fixation (26, 27, 28a, 28b) dudit compartiment de pulvérisation (4), comportant :
- au moins un corps de fermeture (28a, 28b) de ladite ouverture d'accès (5), agencé pour fermer ledit compartiment de pulvérisation (4) ;
- des moyens de commutation (26, 27) du corps de fermeture (28a, 28b) s'approchant de ladite ouverture d'accès (5), la fermant dans ladite configuration initiale, et s'écartant de ladite ouverture d'accès (5), la dégageant, dans ladite configuration de fonctionnement, de façon à introduire lesdits moyens de nettoyage (29) à l'intérieur dudit compartiment de pulvérisation (4).

10. - Cabine (1) selon une ou plusieurs des revendications précédentes, **caractérisée par le fait que** lesdits moyens de commutation (26, 27) comprennent au moins un de ce qui suit :
- au moins une unité de commutation horizontale (26) dudit corps de fermeture (28a, 28b) selon une direction de commutation horizontale (B) ;
- au moins une unité de commutation verticale (27) dudit corps de fermeture (28a, 28b) selon une direction de commutation verticale (C), sensiblement transversale à ladite direction de commutation horizontale (B).
